(19) Europäisches Patentamt
European Patent Office
Office européen des brevets

(11) EP 2 975 564 A1

(12) EUROPEAN PATENT APPLICATION

(43) Date of publication:
20.01.2016 Bulletin 2016/03

(51) Int Cl.:
G06Q 10/06 (2012.01)

(21) Application number: 15176917.1

(22) Date of filing: 15.07.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 15.07.2014 IN MU23112014

(71) Applicant: Tata Consultancy Services Limited
Mumbai 400 021 (IN)

(72) Inventors:
• AGARWAL, Puneet
201301 Noida
Uttar Pradesh (IN)
• SHROFF, Gautam
122003 Gurgaon (IN)
• SINGH, Karamjit
122003 Gurgaon (IN)

(74) Representative: Blot, Philippe Robert Emile
Cabinet Lavoix
2, place d'Estienne d'Orves
75441 Paris Cedex 09 (FR)

(54) **WARRANTY COST ESTIMATION BASED ON COMPUTING A PROJECTED NUMBER OF FAILURES OF PRODUCTS**

(57) Estimating warranty cost of products having multiple parts is described. In an implementation, part-failure data indicative of number of cycles at which each part fails in and after a first predefined time period is determined. Sensor data and service records data are obtained to determine DTC occurrence data and DTC observance data. The DTC occurrence data and the DTC observance data are indicative of number of cycles at which each DTC associated with each part occurs and is observed for first time in the first predefined time period, respectively. Dependency parameters between the part-failure data, the DTC occurrence data and the DTC observance data are identified based on Bayesian Network that represents probabilistic relationships between the part-failure data, the DTC occurrence data and the DTC observance data. Number of failures of products in a second predefined time period is computed based on the dependency parameters for estimating the warranty cost.

300

302 DETERMINING PART-FAILURE DATA, WHERE THE PART-FAILURE DATA IS INDICATIVE OF NUMBER OF CYCLES AT WHICH EACH PART OF PRODUCTS FAILS IN AND AFTER A FIRST PREDEFINED TIME PERIOD

304 OBTAINING SENSOR DATA OF THE PRODUCTS TO DETERMINE DTC OCCURRENCE DATA, WHERE THE DTC OCCURRENCE DATA IS INDICATIVE OF NUMBER OF CYCLES AT WHICH EACH DTC ASSOCIATED WITH EACH PART OCCURS FOR FIRST TIME IN THE FIRST PREDEFINED TIME PERIOD

306 OBTAINING SERVICE RECORDS DATA OF THE PRODUCTS TO DETERMINING DTC OBSERVANCE DATA, WHERE THE DTC OBSERVANCE DATA IS INDICATIVE OF NUMBER OF CYCLES AT WHICH EACH DTC ASSOCIATED WITH EACH PART IS OBSERVED FOR FIRST TIME IN THE FIRST PREDEFINED TIME PERIOD

308 IDENTIFYING DEPENDENCY PARAMETERS BETWEEN THE PART-FAILURE DATA, THE DTC OCCURRENCE DATA AND THE DTC OBSERVANCE DATA, WHERE THE IDENTIFYING IS BASED ON BAYESIAN NETWORK THAT REPRESENTS PROBABILISTIC RELATIONSHIPS BETWEEN THE PART-FAILURE DATA, THE DTC OCCURRENCE DATA AND THE DTC OBSERVANCE DATA

310 COMPUTING NUMBER OF FAILURES OF THE PRODUCTS IN A SECOND TIME PERIOD BASED ON THE DEPENDENCY PARAMETERS FOR ESTIMATING THE WARRANTY COST, WHEREIN THE SECOND TIME PERIOD IS INDICATIVE OF TIME AFTER THE FIRST TIME PERIOD

Fig. 3

EP 2 975 564 A1

**Description**

TECHNICAL FIELD

The present application claims priority to Indian Provisional Patent Application No. 2311/MUM/2014, filed on July 15, 2014, the entirety of which is hereby incorporated by reference.

The present application also claims benefit from Complete after Indian Provisional Patent Application No. 2311/MUM/2014, filed on November 12th, 2014, the entirety of which is hereby incorporated by reference.

The present subject matter relates, in general to computing projected number of failures of products having multiple parts, and warranty cost estimation based on the projected number of failures of the products so computed, and particularly but not exclusively, warranty cost estimation using Bayesian network.

BACKGROUND

Nowadays, when consumers purchase a product, manufacturers of the product usually agree to reimburse the consumers, or replace the product, in case of failure of the product within a specified duration of time. For example, the manufacturers may be liable to reimburse the consumer, or replace the product, in case the product fails within a specific time period from the date of purchase of the product. Such an agreement or arrangement is called warranty. Organizations or the manufacturers of products generally invest resources in order to ensure accurate estimation of warranty costs associated with the products.

Generally, multi-part product manufacturing companies' estimate warranty costs associated with products in order to draw annual budget. However, there are various factors that affect the warranty costs and therefore the task of estimation of warranty costs is complicated. Incorrect estimation of the warranty costs may lead to under-estimation and over-estimation of warranty costs.

The warranty costs are typically estimated based on factors, such as a number of warrantable products, projected number of failures or failure rate of products, and cost per failure. The accuracy of estimated warranty costs depends on the accuracy with which projected number of failures of products can be determined. The higher the accuracy with which the projected number of failures of products is determined, the higher is the accuracy of estimated warranty costs.

Conventional methodologies for determining projected number of failures of products utilize past part-failure data of products. The past part-failure data follows a probability distribution, such as Weibull and log-normal distributions. The conventional methodologies utilize past part-failure data and do not consider factors associated with introduction of newer models of products and new manufacturing facilities or plants for manufacturing the products, for determining the projected number of failures of products. Hence, the accuracy of the projected number of failures of products based on the conventional methodologies is substantially low. As a result, the accuracy of the estimation of warranty cost is compromised and therefore, cannot be considered as reliable.

SUMMARY

A method for computing a projected number of failures of products having multiple parts is disclosed. The method comprises determining, by a processor, part-failure data. The part-failure data is indicative of a number of cycles at which each part fails in and after a first predefined time period. The method further comprises determining diagnosed trouble code (DTC) occurrence data from sensor data of the products. The DTC occurrence data is indicative of a number of cycles at which a DTC associated with a part of the products occurs for a first time in the first predefined time period, and wherein functioning of each of the multiple parts is diagnosed using DTCs associated with a respective part. The DTC is associated for a trouble symptom for the part of the products. The method further comprises determining DTC observance data from service records data of the products. The DTC observance data is indicative of a number of cycles at which each DTC associated with each part is observed for first time in the first predefined time period. The method further comprises identifying, by the processor, dependency parameters between the part-failure data, the DTC occurrence data and the DTC observance data, based on a Bayesian Network. The Bayesian Network represents probabilistic relationships between the part-failure data, the DTC occurrence data and the DTC observance data, and wherein the dependency parameters are associated with the probabilistic relationships. The method further comprises computing, by the processor, the projected number of failures of the products in a second predefined time period based on the dependency parameters. The second predefined time period is indicative of a time period after the first predefined time period. The method further comprises estimating, by the processor, a warranty cost of the products based on the number of projected failures of the products and a part replacement cost of the products.

A system for computing a projected number of failures of products having multiple parts is disclosed. The system comprises a processor and a memory coupled to the processor. The processor executes computer-readable instructions stored in the memory to determine part-failure data. The part-failure data is indicative of a number of cycles at which a part of a product fails in a first predefined time period. The processor further determines DTC occurrence data from sensor data of the products. The DTC occurrence data is indicative of a number of cycles at which a DTC associated with a part of the products occurs for a first time in and after the first predefined time period. The processor further determines DTC observance data from service records data of the products. The DTC observance data is indicative of a number of cycles at which a DTC associated with a part of the products is observed for a first time in the first predefined time period. The processor further identifies dependency parameters between the part-failure data, the DTC occurrence data and the DTC observance databased on a Bayesian Network. The Bayesian Network represents probabilistic relationships between the part-failure data, the DTC occurrence data and the DTC observance data, and wherein the dependency parameters are associated with the probabilistic relationships. The processor further computes a number of projected failures of the products in a second predefined time period based on the dependency parameters, wherein the second predefined time period is indicative of a time period after the first predefined time period. The processor further estimates a warranty cost of the products based on the number of projected failures of the products and a part replacement cost of the products.

A non-transitory computer-readable medium having embodied thereon a computer program for executing a method for computing a projected number of failures of products having multiple parts. The method comprises determining part-failure data, wherein the part-failure data is indicative of a number of cycles at which each part fails in and after a first predefined time period. The method further comprises determining DTC occurrence data from sensor data of the products, wherein the DTC occurrence data is indicative of a number of cycles at which each DTC associated with each part occurs for first time in the first predefined time period. The method further comprises determining DTC observance data from service records data of the products. The DTC observance data is indicative of a number of cycles at which each DTC associated with each part is observed for first time in the first predefined time period. The method further comprises identifying dependency parameters between the part-failure data, the DTC occurrence data and the DTC observance data based on Bayesian Network that represents probabilistic relationships between the part-failure data, the DTC occurrence data and the DTC observance data, and wherein the dependency parameters are associated with the probabilistic relationships; and computing, by the processor, a number of projected failures of the products in a second predefined time period based on the dependency parameters, wherein the second predefined time period is indicative of time after the first predefined time period. The computer program further comprises estimating a warranty cost of the products based on the number of projected failures of the products and part replacement costs of the products.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Fig. 1 illustrates a network environment implementing a warranty cost estimation system for estimation of warranty costs, in accordance with an implementation of the present subject matter.
Fig. 2 illustrates a system environment for collation of data for estimation of warranty costs by the warranty cost estimation system, in accordance with an implementation of the present subject matter.
Fig. 3 illustrates a method for estimating warranty costs, in accordance with an implementation of the present subject matter.

DETAILED DESCRIPTION

System(s) and method(s) for warranty cost estimation using Bayesian network are described. The system(s) and method(s) can be implemented in a variety of computing devices, such as laptops, desktops, workstations, portable computers, tablet computers, servers, and similar systems. However, a person skilled in the art will comprehend that the implementations of the present subject matter are not limited to any particular computing system, architecture, or application device, as they may be adapted to new computing systems and platforms as they become available.

Companies that manufacture multi-part products, for example, home appliances, electronic goods, and automobiles, have been investing heavily in effective and accurate estimation of warranty costs associated with such products. Generally, multi-part product manufacturing companies estimate warranty costs in order to draw their annual budget. However, there are various factors that affect the warranty costs associated with products and therefore, the task of estimation of warranty costs is complicated and difficult. Incorrect estimation of the warranty costs may include under-estimation and over-estimation of warranty costs. Under-estimation of warranty cost can lead to shortage of parts or products in the market, which may adversely affect the replacement of parts or products when the products fail. On the other hand, with over-estimation of warranty costs, the manufacturers may end up keeping aside extra capital for warranties, which could otherwise be used in some other area, such as development and research.

The warranty costs are typically estimated based on factors, such as a number of warrantable products, projected number of failures or failure rate of products, and cost per failure. The accuracy of estimated warranty costs depends on the accuracy with which the projected number of failures of products can be determined. The higher the accuracy with which the projected number of failures of products is determined, the higher is the accuracy of estimated warranty costs.

Conventional methodologies of determination of projected number of failures of products utilize past part-failure data of products. The past part-failure data is said to follow a probability distribution, such as Weibull and log-normal distributions. The projected number of failures of products can be determined based on parameters associated with the probability distribution followed by the past part-failure data. However, the conventional methodologies utilize past part-failure data and do not consider factors associated with introduction of newer models of products and new manufacturing facilities or plants for manufacturing the products, for determination of the projected number of failures of products. Since the number of failures of the newer products or the products manufactured through new manufacturing facilities may not follow from the probability distribution for the past part-failure data of the older models of products, the projected number of failures determined from the past part-failure data may not correctly relate to the number failures of newer products or the products manufactured through the new manufacturing facilities. Thus, the accuracy of the projected number of failures of products based on the conventional methodologies is substantially low. As a result, the accuracy of the estimation of warranty cost is compromised and therefore, cannot be considered as reliable.

Further, conventional methodologies estimate parameters associated with the probability distribution followed by the past part-failure data in product-wise manner, i.e., considering whole product as one unit. Generally, each product can further be divided into parts or more granular levels, and each part can have different failure rates. The conventional methodologies do not consider part-wise failure rates while determination of number of failures of products. Thus, the conventional methodologies provide an inefficient and inaccurate proposition for estimation of warranty costs.

The present subject matter describes systems and methods for estimating warranty costs for products with multiple parts, also referred to as multi-part products. The systems and the methods of the present subject matter provide for improved estimation of warranty costs for multi-part products based on computation of expected or projected number of failures of products with better accuracy in comparison to that determined conventionally.

With the systems and the methods of the present subject matter, the warranty costs can be estimated for multi-part products in which functioning of various parts can be monitored or diagnosed using sensors and an on-board diagnostic system, and for which after sales service can be provided, apart from the warranty. The multi-part products may include, but are not restricted to, automobiles, and electronic and communication devices. The on-board diagnostic system in such a product may record sensor data comprising a diagnosed trouble code (DTC) for each trouble or fault symptom occurring in any of the parts, if any, detected by the sensors. One or more unique DTCs can be associated with a part, for different possible trouble symptoms for the part. Each unique DTC may be for a unique possible trouble symptom for the part. All the DTCs associated with a part may occur when the part fails. One or more DTCs associated with a part may occur before the part fails.

It may be understood that the products for which after sales service is provided may be taken to a service station either for a regular service checkup, or when the product, or a part in the product, has failed. The trouble symptoms or the DTCs for parts of a product may occur before the failure of the parts and also before the product is taken to the service station. Such DTCs may also be observed during the service of the product at the service station. The data associated with the occurrence of DTCs in the products, before the products are taken to the service station, may be referred to as sensor data or tele-diagnostic data of the products. The data associated with the observance of DTCs in the products at the service stations may be referred to as service station data or service records data.

In one implementation, the systems and the methods of the present subject matter facilitate an improved computation of number of failure of products by fusion of past part-failure data of products with additional information, such as DTC occurrence data determined based on the sensor data and DTC observance data determined based on the service records data. The systems and the methods of the present subject matter utilize probabilistic relationships between the past part-failure data, the DTC occurrence data and the DTC observance data, in order to compute an expected number of failures of products and thus estimate the warranty costs of products with higher accuracy. The probabilistic relationships between the past part-failure data, the DTC occurrence data, and the DTC observance data may be governed by conditional dependencies of occurrence and observance of DTCs on a rate of part failure. Further, the extent of conditional dependence may vary over time, e.g., due to introduction of newer models of products and change in the number of product units sold. In order to consider the conditional dependence and the corresponding dynamism for the estimation of warranty costs, the systems and the methods of the present subject matter utilizes a Bayesian network to model the probabilistic relationships and the conditional dependencies between the past part-failure data, the DTC occurrence data and the DTC observance data. The systems and the methods of the present subject matter identify the dependencies based on the Bayesian network and use the identified dependencies to predict an expected number of failures of products with better accuracy.

Further, since each part can have different failure rates, the systems and the methods of the present subject matter may determine the number of failures on a granular level, i.e., on part level, rather than on a product level in order to improve the overall accuracy of the estimation.

Furthermore, the systems and the methods of the present subject matter may utilize a Bayesian network with a part failure node linked to a DTC occurrence node which in turn is linked to a DTC observance node. This Bayesian network herein follows a model that when a part fails, a trouble symptom in terms of DTC occurs in the product. The owner of the product may then take the product to a service station, where the DTC is observed. In one example, the part failure node is modeled using Weibull distribution, and the DTC occurrence and the DTC observance nodes are modeled using Gaussian or Normal distributions. The parameters of such distributions may be utilized to define the dependencies between the part-failure node, the DTC occurrence node, and the DTC observance node. The number of failure of products may be computed based on the dependency parameters, and the warranty cost of the products may be estimated based on the computed number of failures of the products.

As would be gathered, the present subject matter integrates the past part-failure data along with the DTC occurrence data and the DTC observance data associated with the products for estimation of the warranty costs. Further, since the analysis is performed in a part-wise manner, the accuracy of the estimation of warranty costs is improved. All the above-mentioned advantages lead to an optimum utilization of time and resources, which would facilitate in reducing the cost and efforts involved as well. Therefore, the systems and the methods of the present subject matter provide a comprehensive and exhaustive approach for a time-saving, accurate, and inexpensive warranty cost estimation.

These and other advantages of the present subject matter would be described in greater detail in conjunction with the following figures. While the aspects of the described system(s) and method(s) for warranty cost estimation can be implemented in any number of different computing systems, environments, and/or configurations, the implementations are described in the context of the following exemplary system(s).

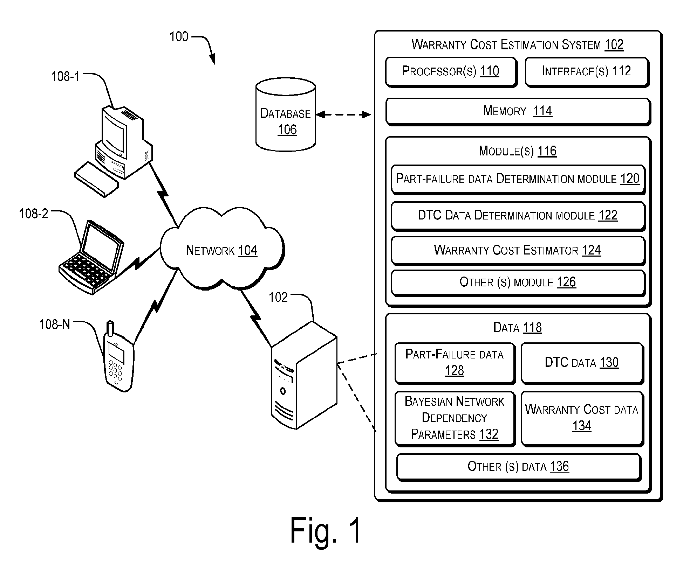

Fig. 1 illustrates a network environment 100 implementing a warranty cost estimation system 102 for estimation of warranty costs in accordance with an implementation of the present subject matter. The warranty cost estimation system 102 hereinafter is referred to as the system 102. In the network environment 100, the system 102 is connected to a network 104. Further, the system 102 is connected to a database 106, where the database 106 may store data that may be utilized for estimation of warranty costs by the system 102. Additionally, the network environment 100 includes one or more user devices 108-1, 108-2...108-N, collectively referred to as user devices 108 and individually referred to as user device 108, connected to the network 104. A user may utilize the user device 108 for estimation of warranty costs through the system 102.

The system 102 can be implemented as a computing device connected to the network 104. For instance, the system 102 may be implemented as workstations, personal computers, desktop computers, multiprocessor systems, laptops, network computers, minicomputers, servers, and the like. In addition, the system 102 may include multiple servers to perform mirrored tasks for users.

Furthermore, the system 102 can be connected to the user devices 108 through the network 104. Examples of the user devices 108 include, but are not limited to personal computers, desktop computers, smart phones, PDAs, and laptops. Communication links between the user devices 108 and the system 102 are enabled through various forms of connections, for example, via dial-up modem connections, cable links, digital subscriber lines (DSL), wireless or satellite links, or any other suitable form of communication.

Moreover, the network 104 may be a wireless network, a wired network, or a combination thereof. The network 104 can also be an individual network or a collection of many such individual networks interconnected with each other and functioning as a single large network, e.g., the internet or an intranet. The network 104 can be implemented as one of the different types of networks, such as intranet, local area network (LAN), wide area network (WAN), the internet, and such. The network 104 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 104 may include network devices, such as network switches, hubs, routers, host bus adapters (HBAs), for providing a link between the system 102 and the user devices 108. The network devices within the network 104 may interact with the system 102 and the user devices 108 through communication links.

As shown, the system 102 includes one or more processor(s) 110, interface(s) 112, and a memory 114 coupled to the processor 110. The processor 110 can be a single processing unit or a number of units, all of which could also include multiple computing units. The processor 110 may be implemented as one or more microprocessors, microcomputers, microcontrollers, digital signal processors, central processing units, state machines, logic circuitries, and/or any devices that manipulate signals based on operational instructions. Among other capabilities, the processor 110 is configured to fetch and execute computer-readable instructions and data stored in the memory 114.

The interfaces 112 may include a variety of software and hardware interfaces, for example, interface for peripheral device(s), such as a keyboard, a mouse, an external memory, and a printer. Further, the interfaces 112 may enable the system 102 to communicate with other computing devices, such as web servers, and external data repositories, such as the database 106, in the network environment 100. The interfaces 112 may facilitate multiple communications within a wide variety of protocols and networks, such as the network 104, including wired networks, e.g., LAN, cable, etc., and wireless networks, e.g., WLAN, cellular, satellite, etc. The interfaces 112 may include one or more ports for connecting the system 102 to a number of computing devices.

The memory 114 may include any non-transitory computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The non-transitory computer-readable medium, however, excludes a transitory, propagating signal.

The system 102 also includes module(s) 116 and data 118. The module(s) 116 include routines, programs, objects, components, data structures, etc., which perform particular tasks or implement particular abstract data types. In one implementation, the module(s) 116 include a part-failure data determination module 120, a DTC data determination module 122, a warranty cost estimator 124, and other module(s) 126. The part-failure data determination module 120, the DTC data determination module 122, and the warranty cost estimator 124 may form part of a warranty cost estimation module in the module(s) 116. The other module(s) 126 may include programs or coded instructions that supplement applications and functions of the system 102.

On the other hand, the data 118, inter alia, serves as a repository for storing data processed, received, and generated by one or more of the module(s) 116. The data 118 includes, for example, part-failure data 128, DTC data 130, Bayesian network dependency parameters 132, warranty cost data 134, and other data 136. The part-failure data 128, the DTC data 130, the Bayesian network dependency parameters 132, and the warranty cost data 134 may form part of warranty cost estimation data in the data 118. The other data 136 includes data generated as a result of the execution of one or more modules in the module(s) 116.

The description hereinafter describes an exemplary procedure of estimation of warranty cost of products using the system 102. In the example described herein, the products are cars having multiple parts P, and each car having various sensors and an on-board diagnostic system to monitor functioning of the multiple parts P. The on-board diagnostic system in each car is capable of recording diagnosed trouble codes (DTCs) for trouble or fault symptoms occurring in any of the parts P, when detected by the sensors. The cars are provided with after sales service at the service stations. Although the description herein is described with reference to cars as the products; the procedure can be applied for estimation of warranty cost for other products including electronics and communication devices, and such, where the products have sensors and on-board diagnostic system for recording DTCs, and the products can be taken to service stations for repair or servicing.

Further, for the purposes of description herein, consider that data is collected for a first predefined time period $[T_1, T_2]$ for n cars indexed from 1 to n, where each car has m parts $P_1$ to $P_m$. In an example, the first predefined time period can be from year 2008 ($T_1$) to year 2010 ($T_2$). Each part $P_j$ is associated with a set of DTCs $D_{jk}$s as $\{D_{j1}, D_{j2}, .... D_{jr}\}$, where k = 1, 2, ... , r. When a part $P_j$ fails, all the DTCs $D_{jk}$s associated with the part $P_j$ occur, and one or more DTCs associated with a part $P_j$ may occur and may be observed before the part $P_j$ fails. Further, the data collected may include part failure data, DTC observance data based on service records data, and DTC occurrence data based on sensor data. The part-failure data is indicative of number of cycles at which each part $P_j$ fails in and after the first predefined time period. This part-failure data may also refer to the past part-failure data. The DTC occurrence data is indicative of number of cycles at which each DTC $D_{jk}$ associated with each part $P_j$ occurs for first time in the first predefined time period. The DTC observance data is indicative of number of cycles at which each DTC $D_{jk}$ associated with each part $P_j$ is observed for first time in the first predefined time period. The number of cycles mentioned herein may be defined in terms of operating time of the product, for example, in hours, days, or months, or defined in terms of operating distance of the product, for example, in kilometers or miles. For the example of cars as the products, the number of cycles may be in terms of kilometers or miles.

In an implementation, the part-failure data determination module 120 determines the part-failure data. In an example, the part-failure data determination module 120 may obtain the part-failure data from the database 106 or an external data repository that may store such a data, and store it in the part-failure data 128. In determining the part-failure data, the part-failure data determination module 120 may identify, for each part Pj, a first set of cars Cj in which the respective part Pj fails for the first time in the first predefined time period $[T_1, T_2]$. The first set of cars Cj may include the index of cars and is thus defined as:

$$C_j = \{\ i\ \}, \qquad\qquad ...\ (1)$$

where i is index of a car in which part $P_j$ fails in the time interval $[T_1, T_2]$.

The part-failure data determination module 120 may further identify, for each part Pj and for each DTC $D_{jk}$ associated with the respective part $P_j$, a second set of cars $C'_{jk}$ in which the respective part $P_j$ fails for the first time after

$T_2$, but the associated respective DTC $D_{jk}$ occurs and is observed for the first time in the first predefined time period $[T_1,T_2]$. The second set of cars $C'_{jk}$ includes index of cars, and is thus defined as:

$$C'_{jk} = \{\ i\ \}, \qquad \dots (2)$$

where i is index of a car in which part $P_j$ fails for the first time after $T_2$.

The part-failure data determination module 120 may further identify, for each part $P_j$, a first part-failure set $Fail_j$ including number of cycles at which the respective part $P_j$ fails for the first time for each car in the first set of cars $C_j$. Thus, the first part-failure set $Fail_j$ is defined as:

$$Fail_j = \{\ p_{ji} : i \in Cj\}, \qquad \dots (3)$$

where $p_{ji}$ is the number of cycles at which part $P_j$ fails for the first time in $i^{th}$ car, where $i \in C_j$. It may be understood that i is from $\{1, 2, ..., n\}$ and j is from $\{1, 2, ..., m\}$.

Further, in an implementation, the DTC data determination module 122 obtains sensor data of the products to determine the DTC occurrence data from the sensor data. In an example, the DTC data determination module 122 may obtain the sensor data from the database 106 or an external data repository that may store such a data, determine the DTC occurrence data from the sensor data, and store the DTC occurrence data in DTC data 130. In determining the DTC occurrence data from the sensor data, the DTC data determination module 122 may determine, for each part $P_j$ and for each DTC $D_{jk}$ associated with the respective part $P_j$, a first DTC occurrence set $Ind_{jk}$ including number of cycles at which the respective DTC $D_{jk}$ associated the respective part $P_j$ occurs for the first time for each car in the first set of cars $C_j$. Thus, the first DTC occurrence set $Ind_{jk}$ may be defined as:

$$Ind_{jk} = \{\ d_{jki} : i \in C_j\}, \qquad \dots (4)$$

where $d_{jki}$ is the number of cycles at which the DTC $D_{jk}$ associated with part $P_j$ occurs for the first time in the $i^{th}$ car, where $i \in C_j$.

The DTC data determination module 122 may further determine, for each part $P_j$ and for each DTC $D_{jk}$ associated with the respective part $P_j$, a second DTC occurrence set $Ind'_{jk}$ including number of cycles at which the respective DTC $D_{jk}$ associated the respective part $P_j$ occurs for the first time for each car in the second set of cars $C'_{jk}$. Thus, the second DTC occurrence set $Ind'_{jk}$ may be defined as:

$$Ind'_{jk} = \{\ d'_{jki} : i \in C'_{jk}\}, \qquad \dots (5)$$

where $d'_{jki}$ is the number of cycles at which the DTC $D_{jk}$ associated with part $P_j$ occurs for the first time in the $i^{th}$ car, where $i \in C'_{jk}$.

Further, in an implementation, the DTC data determination module 122 obtains service records data of the products to determine the DTC observance data from the service records data. In an example, the DTC data determination module 122 may obtain the service records data from the database 106 or an external data repository that may store such a data, determine the DTC observance data from the service records data, and store the DTC observance data in DTC data 130. In determining the DTC observance data from the service records data, the DTC data determination module 122 may determine, for each part $P_j$ and for each DTC $D_{jk}$ associated with the respective part $P_j$, a first DTC observance set $Serv_{jk}$ including number of cycles at which the respective DTC $D_{jk}$ associated the respective part $P_j$ is observed for the first time for each car in the first set of cars $C_j$. Thus, the first DTC observance set $Serv_{jk}$ may be defined as:

$$Serv_{jk} = \{\ s_{jki} : i \in C_j\}, \qquad \dots (6)$$

where $s_{jki}$ is the number of cycles at which the DTC $D_{jk}$ associated with part $P_j$ is observed for the first time in the $i^{th}$ car, where $i \in C_j$.

The DTC data determination module 122 may further determine, for each part $P_j$ and for each DTC $D_{jk}$ associated with the respective part $P_j$, a second DTC observance set $Serv'_{jk}$ including number of cycles at which the respective DTC $D_{jk}$ associated the respective part $P_j$ is observed for the first time for each car in the second set of cars $C'_{jk}$. Thus,

the second DTC observance set Serv'$_{jk}$ may be defined as:

$$Serv'_{jk} = \{ \; s'_{jki} : i \in C'_{jk} \}, \qquad \dots (7)$$

where s'$_{jki}$ is the number of cycles at which the DTC D$_{jk}$ associated with part P$_j$ is observed for the first time in the ith car, where i $\in$ C'$_{jk}$.

In an example, p$_{ji}$, d$_{jki}$, and s$_{jki}$ from the sets Fail$_j$, Ind$_{jk}$, and Serv$_{jk}$, respectively, satisfy the following relation:

$$d_{jki} \leq s_{jki} \leq p_{ji}, \qquad \dots (8)$$

In one example, each of the parts P$_j$ and the associated DTCs D$_{jk}$s may have some dependency. Some of the examples of such dependencies are as follows: 1) DTC D$_{jk}$ always occurs, roughly two months before the part failure; 2) DTC D$_{jk}$ which occurs before the actual part failure, follow some probability distribution.

In an implementation, the warranty cost estimator 124 identifies dependency parameter between the part-failure data, the DTC occurrence data and the DTC observance data. This identification is based on Bayesian Network that represents probabilistic relationships between the part-failure data, the DTC occurrence data and the DTC observance data. The dependency parameters are associated with the probabilistic relationships between the part-failure data, the DTC occurrence data and the DTC observance data. The Bayesian network combines the Bayesian probability theory and the notion of conditional dependence to represent the dependencies between the part-failure data, the DTC occurrence data and the DTC observance data.

For identification of the dependency parameters, the warranty cost estimator 124 may determine probability distribution functions that are respectively followed by the first part-failure set Fail$_j$, the first DTC occurrence set Ind$_{jk}$, the second DTC occurrence set Ind'$_{jk}$, the first DTC observance set Serv$_{jk}$, and the second DTC observance set Serv'$_{jk}$.

In an example, the first part-failure set Fail$_j$, or the values f$_j$ of Fail$_j$, follows Weibull distribution with a shape parameter as $\beta_j$ and a scale parameter as $\alpha_j$. Thus, the values f$_j$ of Fail$_j$ can be defined as:

$$f_j \sim Weibull(\alpha_j, \beta_j). \qquad \dots (9)$$

Here the scale parameter $\alpha_j$ follows a Uniform distribution with lower limit as 0 and upper limit as a > 0, and the shape parameter $\beta_j$ follows a Uniform distribution with lower limit as 0 and upper limit as b > 0.

In an example, the first DTC occurrence set Ind$_{jk}$, or the values i$_{jk}$ therein, follow Normal distribution with a mean dependent on the part-failure data, i.e., the values f$_j$ of Fail$_j$. The values i$_{jk}$ of the first DTC occurrence set Ind$_{jk}$ follow Normal distribution with mean as f$_j$ - f$_j$ x r$_{jk}$ and standard deviation as $\sigma^1_{jk}$. Thus, the values i$_{jk}$ of Ind$_{jk}$ can be defined as:

$$i_{jk} \sim Normal\ distribution\ (f_j - f_j \; x \; r_{jk}, \sigma^1_{jk}), \qquad \dots (10)$$

where f$_j$ represents the values from the set Fail$_j$, r$_{jk}$ follows a Uniform distribution with lower limit as r$_1$ > 0 and upper limit as r$_2$ > 0, and $\sigma^1_{jk}$ follows Uniform distribution with lower limit as 0 and upper limit as c$_1$ > 0.

Similarly, the second DTC occurrence set Ind'$_{jk}$, or the values i'$_{jk}$ therein, follow Normal distribution similar to the one followed by the values i$_{jk}$ of the first DTC occurrence set Ind$_{jk}$.

In an example, the first DTC observance set Serv$_{jk}$, or the values s$_{jk}$ therein, follow Normalize distribution with a mean dependent on the part-failure data, i.e., the values f$_j$ of Fail$_j$, and on the DTC occurrence data, i.e., the values i$_{jk}$ of Ind$_{jk}$. The values s$_{jk}$ of the first DTC observance set Serv$_{jk}$ follow Normal distribution with mean as (f$_j$ - i$_{jk}$) x m$_{jk}$ + i$_{jk}$ and standard deviation as c$^2_{jk}$. Thus, the values s$_{jk}$ of Serv$_{jk}$ can be defined as:

$$S_{jk} \sim Normal\ distribution\ ((f_j - i_{jk}) \; x \; m_{jk} + i_{jk}, \sigma^2_{jk}), \qquad \dots (11)$$

where f$_j$ represents the values from the set Fail$_j$, i$_{jk}$ represents the values from the set Ind$_{jk}$, m$_{jk}$ follows a Uniform distribution with lower limit as 0 and upper limit as 1, and $\sigma^2_{jk}$ follows Uniform distribution with lower limit as 0 and upper limit as c$_2$ > 0.

Similarly, the second DTC observance set Serv'$_{jk}$, or the values s'$_{jk}$ therein, follow Normal distribution similar to the one followed by the values $s_{jk}$ of the first DTC observance set $Serv_{jk}$.

According to the example described herein, the dependency parameters are identified based on: (1) mean and variance of Normal distributions for the first DTC occurrence set $Ind_{jk}$ and the second DTC occurrence set $Ind'_{jk}$; and (2) mean and variance of Normal distributions for the first DTC observance set $Serv_{jk}$ and the second DTC observance set $Serv'_{jk}$. In the example describe herein, the dependency parameters are $r_{jk}$, $\sigma^1_{jk}$, $m_{jk}$, and $\sigma^2_{jk}$.

Further, the system 102 can compute the number of failures of cars in a second predefined time period $[T_3, T_4]$ for different scenarios. The second predefined time period $[T_3, T_4]$ is indicative of time after the first predefined time period $[T_1, T_2]$. In an example, if the first predefined time period is from year 2008 ($T_1$) to year 2010 ($T_2$), then the second predefined time period can be from year 2011 ($T_3$) to year 2013 ($T_4$). In first scenario, the system 102 may utilize the part failure data, i.e., the first part-failure set $Fail_j$, and the DTC observance data, i.e., the first and the second DTC observance sets $Serv_{jk}$ and $Serv'_{jk}$, for computing the number of failures of cars in second predefined time period $[T_3, T_4]$. In second scenario, the system 102 may utilize the part failure data, i.e., the first part-failure set $Fail_j$, the DTC occurrence data, i.e., the first and the second DTC occurrence sets $Ind_{jk}$ and $Ind'_{jk}$, and the DTC observance data, i.e., the first and the second DTC observance sets $Serv_{jk}$ and $Serv'_{jk}$, for computing the number of failures of cars in the second predefined time period $[T_3, T_4]$. In an implementation, data associated with the number of failures of cars may be stored in the warranty cost data 134.

According to the first scenario, using the values $f_j$ from $Fail_j$ and the values $s_{jk}$ from $Serv_{jk}$ in the probability distribution functions described above, the warranty cost estimator 124 may learn the values of $i_{jk}$, $r_{jk}$, $\sigma^1_{jk}$, $m_{jk}$, and $\sigma^2_{jk}$. Further, using the learnt values of $i_{jk}$, $r_{jk}$, $\sigma^1_{jk}$, $m_{jk}$, and $\sigma^2_{jk}$, and using the values $s'_{jk}$ from $Serv'_{jk}$ in the probability distribution functions described above, the warranty cost estimator 124 may learn the values of $f_{jk}$ as a second part-failure sets $Fail'_{jk}$. The second part-failure set $Fail'_{jk}$ is indicative of number of cycles at which the respective part $P_j$ fails for the first time after the first predefined time period.

Then, the warranty cost estimator 124 determines a union set for each part $P_j$ based on union of the first part-failure set $Fail_j$ and the second part-failure set $Fail'_{jk}$ for the respective part $P_j$. Thus, the union set is defined as:

$$Fail''_{jk} = Fail_j \; U \; Fail'_{jk}. \qquad \dots (12)$$

It may be noted that $Fail_j \cap Fail'_{jk}$ is a null set.

Further, using $Fail''_{jk}$ in the probability distribution functions described above, the warranty cost estimator 124 may learn $\alpha_j^{new}$, $\beta_j^{new}$. Subsequently, the warranty cost estimator 124 may determine the probability of failure of the part $P_j$ in $[T_3, T_4]$ based on:

$$Z_j = \; \exp(-(T_4 \; x \; (\alpha_j^{new}/ \beta_j^{new}))) - \exp(-(T_3 \; x \; (\alpha_j^{new}/ \beta_j^{new}))) \qquad \dots (13)$$

Further, the warranty cost estimator 124 may compute the number of failures for the cars in the time period $[T_3, T_4]$ as:

$$\Sigma_i \, \Sigma_j \, (Z_j) \qquad \dots (14)$$

where j = 1 to m, and i = 1 to n.

According to the second scenario, using the values $f_j$ from $Fail_j$, the values $i_{jk}$ from $Ind_{jk}$, and the values $s_{jk}$ from $Serv_{jk}$ in the probability distribution functions described above, the warranty cost estimator 124 may learn the values of $r_{jk}$, $\sigma^1_{jk}$, $m_{jk}$, and $\sigma^2_{jk}$. Further, using the learnt values of $r_{jk}$, $\sigma^1_{jk}$, $m_{jk}$, and $\sigma^2_{jk}$, and using the values $i'_{jk}$ from $Ind'_{jk}$ and the values $s'_{jk}$ from $Serv'_{jk}$ in the probability distribution functions described above, the warranty cost estimator 124 may learn the values of $f'_{jk}$ as a second part-failure sets $Fail'_{jk}$. The second part-failure set $Fail'_{jk}$ is indicative of number of cycles at which the respective part $P_j$ fails for the first time after the first predefined time period.

Then, the warranty cost estimator 124 determines a union set for each part $P_j$ based on union of the first part-failure set $Fail_j$ and the second part-failure set $Fail'_{jk}$ for the respective part $P_j$. Thus, the union set is defined as:

$$Fail''_{jk} = Fail_j \; U \; Fail'_{jk}. \qquad \dots (15)$$

It may be noted that $Fail_j \cap Fail'_{j,k}$ is a null set.

Further, using $Fail''_{jk}$ in the probability distribution functions described above, the warranty cost estimator 124

may learn $\alpha_j^{new}$, $\beta_j^{new}$. Subsequently, the warranty cost estimator 124 may determine the probability of failure of the part $P_j$ in $[T_3,T_4]$ based on:

$$Z_j = \exp(-(T_4 \times (\alpha_j^{new}/ \beta_j^{new}))) - \exp(-(T_3 \times (\alpha_j^{new}/ \beta_j^{new}))) \qquad \dots (16)$$

Further, the warranty cost estimator 124 may compute the number of failures for the cars in the time period $[T_3, T_4]$ as:

$$\Sigma_i \Sigma_j (Z_j) \qquad \dots (17)$$

where j = 1 to m, and i = 1 to n.

In one implementation, the warranty cost estimator 124 may learn the dependency parameters and other values using a technique, such as Maximum-likelihood estimation technique, Expectation Maximization (EM) technique, or Marcov Chain Monte Carlo (MCMC) technique. In an implementation, the dependency parameters may be stored in the Bayesian network dependency parameters 132.

After this, the warranty cost estimator 124 estimates the warranty cost of cars in the second predefined time period based on the computed number of failures of cars and part replacement cost. The part replacement cost may also be referred to as the cost per failure. In an example, the warranty cost of cars may be equal to the computed number of failures of cars multiplied with the cost per failure. In an implementation, the data associated with the estimated warranty cost may be stored in the warranty cost data 134.

In an example, another cost, namely a penalty cost, may be incurred in terms of customer dissatisfaction for the parts which fail after the warranty period is over. This penalty cost associated with the parts may decrease with time. For this, the warranty cost estimator 124 may determine the parts that fail before the warranty period. The warranty cost of $j^{th}$ part $P_j$ with a warranty period as $w_j$ can be defined as:

$$(\text{Warranty cost})_j = R_j\, F_j(w_j) + R_j\, b\, e^{-cwj}\, (1 - F(w_j)) \qquad \dots (18)$$

where b and c > 0, $F(w_j)$ is a fraction of $j^{th}$ parts which fail before the warranty period $w_j$, and $R_j$ is the cost per failure for the part $P_j$.

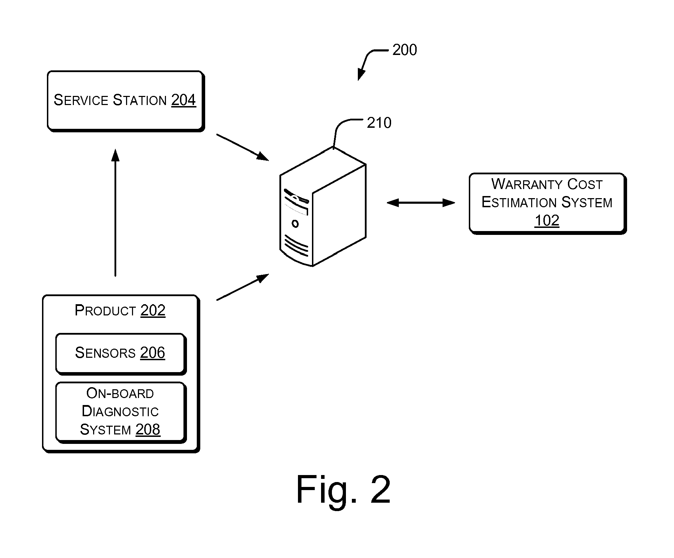

Fig. 2 illustrates a system environment 200 for collation of data for estimation of warranty costs by the warranty cost estimation system 102, in accordance with an implementation of the present subject matter. For the sake of simplicity, one product 202 and one service station 204 are illustrated in Fig. 2. In an implementation, the system environment 200 may include multiple products and multiple service stations. As shown, the product 202 includes sensors 206 and an on-board diagnostic system 208 for monitoring of functioning of various parts in the product 202 and for recording of DTCs which may occur in case a fault symptom is detected in any of the parts in the product 202. When the product 202 is taken to the service station 204, the sensor data may be gathered at the service station 204 to determine data associated with the occurrence of the DTCs, i.e., the DTC occurrence data, in the product 202. In addition, at the service station 204, the data associated with the observance of the DTCs, i.e., the DTC observance data, for the product 202 may also be gathered at the service station 204. The DTC observance data may be gathered as the service records data. For gathering the data, a data collector or a diagnostic device (not shown) may be coupled to the product 202 at the service station 204.

Further, in an implementation, the sensor data and the service records data gathered at the service station 204 may be transmitted, for example, in real-time or intermittently, to a central server 210, or an external data repository. The system 102 may obtain the sensor data and the service records data of the products from the central server 210, or the external data repository, as the case may be, for the purpose of determining the DTC occurrence data and the DTC observance data, and then determining number of failures of the products and the estimation of warranty costs for the products, in accordance with the present subject matter.

In an implementation, the sensor data in the product 202 may be transmitted, for example, in real-time or intermittently, directly to the central server 210, or to the external data repository, or to the service station 204.

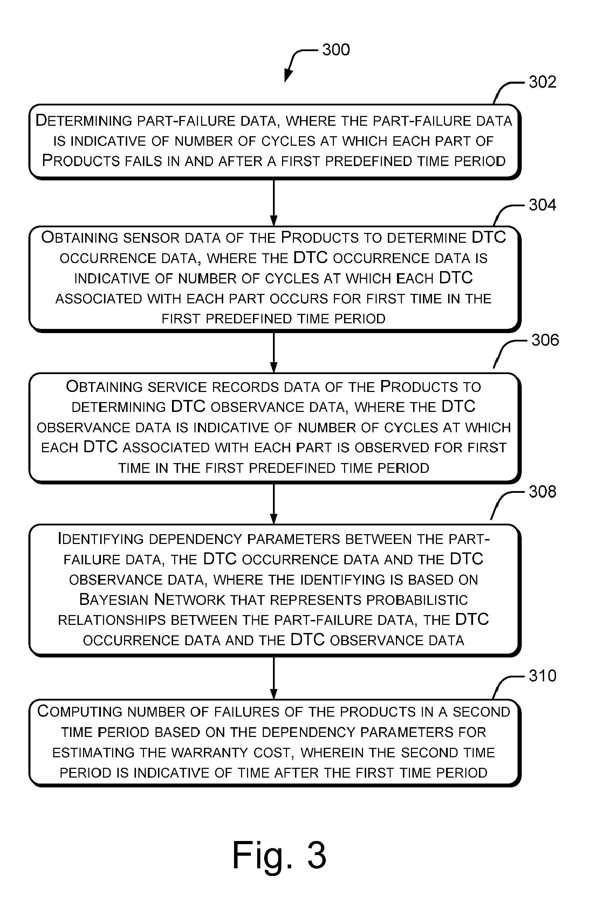

Fig. 3 illustrates a method 300 for estimating warranty costs, in accordance with an implementation of the present subject matter. The method 300 may be implemented in a variety of computing systems in several different ways. For example, the method 300, described herein, may be implemented using a warranty cost estimation system 102, as described above.

The method 300, completely or partially, may be described in the general context of computer executable instructions. Generally, computer executable instructions can include routines, programs, objects, components, data structures, procedures, modules, functions, etc., that perform particular functions or implement particular abstract data types. A person skilled in the art will readily recognize that steps of the method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of the described method 300.

The order in which the method 300 is described is not intended to be construed as a limitation, and any number of the described method blocks can be combined in any order to implement the method, or an alternative method. Additionally, individual blocks may be deleted from the method without departing from the scope of the subject matter described herein. Furthermore, the methods can be implemented in any suitable hardware, software, firmware, or combination thereof. It will be understood that even though the method 300 is described with reference to the system 102, the description may be extended to other systems as well.

At block 302, part-failure data is determined, where the part-failure data is indicative of number of cycles at which each part $P_j$ of products fails in and after a first predefined time period $[T_1, T_2]$. In determining the part-failure data, for each part $P_j$, a first set of products $C_j$ is identified in which the respective part $P_j$ fails for first time in the first predefined time period. Also, for each part $P_j$ and for each DTC $DTC_{jk}$ associated with the respective part $P_j$, a second set of products $C'_{jk}$ is identified in which the respective part $P_j$ fails for first time after the first predefined time period and the associated DTC $DTC_{jk}$ occurs and is observed for first time in the first predefined time period. Further, for each part $P_j$, a first part-failure set $Fail_j$ is determined, which includes number of cycles at which the respective part $P_j$ fails for first time for each product in the first set of products $C_j$. In an implementation, the part-failure data, the $Fail_j$, the $C_j$, and $C'_{jk}$ may be determined and identified, as the case may be, by the system 102.

At block 304, sensor data of the products is obtained to determine DTC occurrence data, where the DTC occurrence data is indicative of number of cycles at which each DTC $DTC_{jk}$ associated with each part $P_j$ occurs for first time in the first predefined time period. In determining the DTC occurrence data from the sensor data, for each part $P_j$ and for each DTC $DTC_{jk}$ associated with the respective part $P_j$, a first DTC occurrence set $Ind_{jk}$ is determined, which includes number of cycles at which the respective DTC $DTC_{jk}$ associated with the respective part $P_j$ occurs for the first time for each product in the first set of products $C_j$. Similarly, for each part $P_j$ and for each DTC $DTC_{jk}$ associated with the respective part $P_j$, a second DTC occurrence set $Ind'_{jk}$ is determined, which includes number of cycles at which the respective DTC $DTC_{jk}$ associated with the respective part $P_j$ occurs for the first time for each product in the second set of products $C'_{jk}$. In an implementation, the DTC occurrence data, the $Ind_{jk}$, and the $Ind'_{jk}$ may be determined by the system 102.

At block 306, service records data of the products is obtained to determine DTC observance data, where the DTC observance data is indicative of number of cycles at which each DTC, $DTC_{jk}$ associated with each part $P_j$ is observed for first time in the first predefined time period. In determining the DTC observance data from the service records data, for each part $P_j$ and for each DTC $DTC_{jk}$ associated with the respective part $P_j$, a first DTC observance set $Serv_{jk}$ is determined, which includes number of cycles at which the respective DTC $DTC_{jk}$ associated with the respective part $P_j$ is observed for the first time for each product in the first set of products $C_j$. Similarly, for each part $P_j$ and for each DTC $DTC_{jk}$ associated with the respective part $P_j$, a second DTC observance set $Serv'_{jk}$ is determined, which includes number of cycles at which the respective DTC $DTC_{jk}$ associated with the respective part $P_j$ is observed for the first time for each product in the second set of products $C'_{jk}$. In an implementation, the DTC observance data, the $Serv_{jk}$, and the $Serv'_{jk}$ may be determined by the system 102.

At block 308, dependency parameters between the part-failure data, the DTC occurrence data and the DTC observance data are identified. The dependency parameters are identified based on Bayesian Network that represents probabilistic relationships between the part-failure data, the DTC occurrence data and the DTC observance data. The dependency parameters are associated with the probabilistic relationships between the part-failure data, the DTC occurrence data and the DTC observance data. In an implementation, the dependency parameters may be identified by the system 102.

For identification of dependency parameters, probability distribution functions that are respectively followed by the first part-failure set $Fail_j$, the first DTC occurrence set $Ind_{jk}$, the second DTC occurrence set $Ind'_{jk}$, the first DTC observance set $Serv_{jk}$, and the second DTC observance set $Serv'_{jk}$ are determined. In an implementation, the first part-failure set $Fail_j$ may follow Weibull distribution; the first DTC occurrence set $Ind_{jk}$ and the second DTC occurrence set $Ind'_{jk}$ respectively may follow Normal distribution with a mean dependent on the part-failure data; and the first DTC observance set $Serv_{jk}$ and the second DTC observance set $Serv'_{jk}$ respectively may follow Normalize distribution with a mean dependent on the part-failure data and the DTC occurrence data. Further, the dependency parameters are identified based on the mean and the variance of Normal distributions for the first DTC occurrence set $Ind_{jk}$ and the second DTC occurrence set $Ind'_{jk}$, and the mean and the variance of Normal distributions for the first DTC observance set $Serv_{jk}$ and the second DTC observance set $Serv'_{jk}$.

Further, at block 310, number of failures of the products in a second predefined time period $[T_3, T_4]$ is computed

based on the dependency parameters. The second predefined time period is indicative of time after the first predefined time period The number of failure of products may be computed for estimating the warranty cost of the products. In an implementation, the warranty cost of the products may be estimated based on the computed number of failures of the products and part replacement cost. The part replacement cost may also be referred to as a cost per failure. In an implementation, the number of failures of the products may be computed by the system 102, and the warranty cost of the products may be estimated by the system 102.

In an implementation, for computing the number of failures of the products, for each part $P_j$, the dependency parameters may be learnt using the first part-failure set $Fail_j$, the first DTC observance set $Serv_{jk}$ and the probability distribution functions. Then, using the learnt dependency parameters and the second DTC observance set $Serv'_{jk}$, a second part-failure set $Fail'_{jk}$ may be learnt for each part $P_j$, where the second part-failure set $Fail'_{jk}$ is indicative of number of cycles at which the respective part $P_j$ fails for the first time after the first predefined time period. After this, a union set may be determined for each part $P_j$ based on union of the first part-failure set $Fail_j$ and the second part-failure set $Fail'_{jk}$ for the respective part $P_j$. Further, for each part $P_j$, shape and scale parameters of Weibull distribution may be learnt based on the union set, and the number of failures of the products may then be computed based on the learnt shape and scale parameters for the each part $P_j$.

In an implementation, for computing the number of failures of the products, for each part $P_j$, the dependency parameters may be learnt using the first part-failure set $Fail_j$, the first DTC occurrence set $Ind_{jk}$, the first DTC observance set $Serv_{jk}$ and the probability distribution functions. Then, using the learnt dependency parameters, the second DTC occurrence set $Ind'_{jk}$ and the second DTC observance set $Serv'_{jk}$, a second part-failure set $Fail'_{jk}$ may be determined for each part $P_j$, wherein the second part-failure set $Fail'_{jk}$ is indicative of number of cycles at which the respective part $P_j$ fails for the first time after the first predefined time period. After this, a union set may be determined for each part $P_j$ based on union of the first part-failure set $Fail_j$ and the second part-failure set $Fail'_{jk}$ for the respective part $P_j$. Subsequently, for each part $P_j$, shape and scale parameters of Weibull distribution are learnt based on the union set, and the number of failures of the products may be computed based on the learnt shape and scale parameters for the each part $P_j$.

Although implementations of a method for estimating warranty costs of products having multiple parts have been described in language specific to structural features and/or methods, it is to be understood that the present subject matter is not necessarily limited to the specific features or methods described.

## Claims

1.    A method for computing a projected number of failures of products having multiple parts, wherein the method comprises:

       determining, by a processor, part-failure data, wherein the part-failure data is indicative of a number of cycles at which each part fails in and after a first predefined time period;
       determining diagnosed trouble code (DTC) occurrence data from sensor data of the products, wherein the DTC occurrence data is indicative of a number of cycles at which each DTC associated with each part occurs for first time in the first predefined time period, and wherein functioning of each of the multiple parts is diagnosed using DTCs associated with a respective part, and wherein a DTC of the DTCs is associated for a trouble symptom for a part of the products;
       determining DTC observance data from service records data of the products, wherein the DTC observance data is indicative of a number of cycles at which each DTC associated with each part is observed for first time in the first predefined time period;
       identifying, by the processor, dependency parameters between the part-failure data, the DTC occurrence data and the DTC observance data, based on Bayesian Network, wherein the Bayesian Network represents probabilistic relationships between the part-failure data, the DTC occurrence data and the DTC observance data, and wherein the dependency parameters are associated with the probabilistic relationships; and
       computing, by the processor, the projected number of failures of the products in a second predefined time period based on the dependency parameters, and wherein the second predefined time period is indicative of a time period after the first predefined time period.

2.    The method as claimed in claim 1, wherein determining the part-failure data comprises:

       identifying, for each part, a first set of products in which the respective part fails for a first time in the first predefined time period;
       identifying, for each part and for each DTC associated with the respective part, a second set of products in which the respective part fails for a first time after the first predefined time period, and the associated DTC occurs and the associated DTC is observed for a first time in the first predefined time period; and
determining, for each part, a first part-failure set including a number of cycles at which the respective part fails for a first time for each product in the first set of products.

3. The method of claim 2, wherein determining the DTC occurrence data from the sensor data comprises:

determining, for each part and for each DTC associated with the respective part, a first DTC occurrence set including a number of cycles at which the respective DTC associated with the respective part occurs for the first time for each product in the first set of products; and
determining, for each part and for each DTC associated with the respective part, a second DTC occurrence set including a number of cycles at which the respective DTC associated with the respective part occurs for the first time for each product in the second set of products.

4. The method as claimed in claim 3, wherein determining the DTC observance data from the service records data comprises:

determining, for each part and for each DTC associated with the respective part, a first DTC observance set including number of cycles at which the respective DTC associated with the respective part is observed for the first time for each product in the first set of products; and
determining, for each part and for each DTC associated with the respective part, a second DTC observance set including a number of cycles at which the respective DTC associated with the respective part is observed for the first time for each product in the second set of products.

5. The method as claimed in claim 4, wherein identifying the dependency parameters comprises:

determining probability distribution functions that are respectively followed by the first part-failure set, the first DTC occurrence set, the second DTC occurrence set, the first DTC observance set, and the second DTC observance set, wherein
the first part-failure set follows Weibull distribution,
the first DTC occurrence set and the second DTC occurrence set respectively follows a Normal distribution with a mean dependent on the part-failure data, and
the first DTC observance set and the second DTC observance set respectively follows a Normalize distribution with a mean dependent on the part-failure data and the DTC occurrence data,
wherein the dependency parameters are based on:

a mean and variance of Normal distributions for the first DTC occurrence set and the second DTC occurrence set, and
a mean and variance of Normal distributions for the first DTC observance set and the second DTC observance set.

6. The method as claimed in claim 5, wherein computing the projected number of failures of the products comprises:

learning, for each part, the dependency parameters using the first part-failure set, the first DTC observance set and the probability distribution functions;
learning a second part-failure set for each part using the dependency parameters so learnt and the second DTC observance set, wherein the second part-failure set is indicative of a number of cycles at which the respective part fails for the first time after the first predefined time period;
determining a union set for each part based on a union of the first part-failure set and the second part-failure set for the respective part; and
learning, for each part, shape and scale parameters of a Weibull distribution based on the union set, wherein the projected number of failures of the products is based on the shape and the scale parameters for the each part.

7. The method as claimed in claim 5, wherein computing the number of failures of the products further comprises:

learning, for each part, the dependency parameters using the first part-failure set, the first DTC occurrence set, the first DTC observance set and the probability distribution functions;
learning a second part-failure set for each part using the dependency parameters so learnt, the second DTC occurrence set and the second DTC observance set, wherein the second part-failure set is indicative of a number of cycles at which the respective part fails for the first time after the first predefined time period;

determining a union set for each part based on union of the first part-failure set and the second part-failure set for the respective part; and

learning for each part, shape and scale parameters of Weibull distribution based on the union set, wherein the computing the number of failures of the products is based on the learnt shape and scale parameters for the each part.

8. The method as claimed in claim 1 further comprising:

estimating, by the processor, a warranty cost of the products based on the number of projected failures of the products and a part replacement cost of the products.

9. A system for computing a projected number of failures of products having multiple parts, wherein the system comprises:

a processor;

a memory coupled to the processor , wherein the processor executes computer-readable instructions stored in the memory to:

determine part-failure data, wherein the part-failure data is indicative of a number of cycles at which a part of a product fails in a first predefined time period;

determine diagnosed trouble code (DTC) occurrence data from sensor data of the products, wherein the DTC occurrence data is indicative of a number of cycles at which a DTC associated with a part of the products occurs for a first time in and after the first predefined time period, and wherein functioning of each of the multiple parts is diagnosed using DTCs associated with a respective part, and wherein the DTC is associated for a trouble symptom for the part of the product; and

determine DTC observance data from service records data of the products, wherein the DTC observance data is indicative of a number of cycles at which a DTC associated with a part of the products is observed for a first time in the first predefined time period; and

identify dependency parameters between the part-failure data, the DTC occurrence data and the DTC observance databased on a Bayesian Network, wherein the Bayesian Network represents probabilistic relationships between the part-failure data, the DTC occurrence data and the DTC observance data, and wherein the dependency parameters are associated with the probabilistic relationships; and

compute a number of projected failures of the products in a second predefined time period based on the dependency parameters, wherein the second predefined time period is indicative of a time period after the first predefined time period.

10. The system of claim 9, the processor executes the computer-readable instructions to:

identify, for each part, a first set of products in which the respective part fails for a first time in the first predefined time period;

identify, for each part and for each DTC associated with the respective part, a second set of products in which the respective part fails for a first time after the first predefined time period and the DTC occurs and the DTC is observed for a first time in the first predefined time period; and

determine, for each part, a first part-failure set including a number of cycles at which the respective part fails for a first time for each product in the first set of products.

11. The system of claim 10, wherein the the processor executes the computer-readable instructions to:

determine, for each part and for each DTC associated with the respective part, a first DTC occurrence set including a number of cycles at which the respective DTC associated with the respective part occurs for the first time for each product in the first set of products; and

determine, for each part and for each DTC associated with the respective part, a second DTC occurrence set including a number of cycles at which the respective DTC associated with the respective part occurs for the first time for each product in the second set of products.

12. The system of claim 11, wherein the processor executes the computer-readable instructions to,
determine, for each part and for each DTC associated with the respective part, a first DTC observance set including a number of cycles at which the respective DTC associated with the respective part is observed for the first time for each product in the first set of products; and
determine, for each part and for each DTC associated with the respective part, a second DTC observance set including a number of cycles at which the respective DTC associated with the respective part is observed for the first time for each product in the second set of products.

13. The system of claim 12, wherein the processor executes the computer-readable instructions to,
determine probability distribution functions that are respectively followed by the first part-failure set, the first DTC occurrence set, the second DTC occurrence set, the first DTC observance set, and the second DTC observance set, wherein
the first part-failure set follows a Weibull distribution,
the first DTC occurrence set and the second DTC occurrence set respectively follows a Normal distribution with a mean dependent on the part-failure data, and
the first DTC observance set and the second DTC observance set respectively follows a Normalize distribution with a mean dependent on the part-failure data and the DTC occurrence data,
wherein the dependency parameters are based on,
mean and variance of Normal distributions for the first DTC occurrence set and the second DTC occurrence set, and
mean and variance of Normal distributions for the first DTC observance set and the second DTC observance set.

14. The system of claim 13, wherein the processor executes the computer-readable instructions to,
learn, for each part, the dependency parameters using the first part-failure set, the first DTC observance set and the probability distribution functions;
learn a second part-failure set for each part using the dependency parameters so learnt and the second DTC observance set, wherein the second part-failure set is indicative of a number of cycles at which the respective part fails for the first time after the first predefined time period;
determine a union set for each part based on union of the first part-failure set and the second part-failure set for the respective part; and
learn for each part, shape and scale parameters of a Weibull distribution based on the union set, wherein computing the number of projected failures of the products is based on the shape and the scale parameters for each part.

15. The system as claimed in claim 13, wherein the processor executes the computer-readable instructions to,
learn, for each part, the dependency parameters using the first part-failure set, the first DTC occurrence set, the first DTC observance set and the probability distribution functions;
learn a second part-failure set for each part using the dependency parameters so learnt, the second DTC occurrence set and the second DTC observance set, wherein the second part-failure set is indicative of a number of cycles at which the respective part fails for the first time after the first predefined time period;
determine a union set for each part based on union of the first part-failure set and the second part-failure set for the respective part; and
learn for each part, a shape and scale parameters of a Weibull distribution based on the union set, wherein the the number of projected failures of the products is based on the shape and the scale parameters for each part.

16. The system of claim 9, wherein the processor executes the computer-readable instructions to estimate a warranty cost of the products based on the number of projected failures of the products and part replacement costs of the products.

Fig. 1

Fig. 2

┌─ 300

┌─ 302
┌─────────────────────────────────────────────────────────┐
│ DETERMINING PART-FAILURE DATA, WHERE THE PART-FAILURE DATA │
│ IS INDICATIVE OF NUMBER OF CYCLES AT WHICH EACH PART OF    │
│ PRODUCTS FAILS IN AND AFTER A FIRST PREDEFINED TIME PERIOD │
└─────────────────────────────────────────────────────────┘

┌─ 304
┌─────────────────────────────────────────────────────────┐
│ OBTAINING SENSOR DATA OF THE PRODUCTS TO DETERMINE DTC    │
│ OCCURRENCE DATA, WHERE THE DTC OCCURRENCE DATA IS         │
│ INDICATIVE OF NUMBER OF CYCLES AT WHICH EACH DTC          │
│ ASSOCIATED WITH EACH PART OCCURS FOR FIRST TIME IN THE    │
│ FIRST PREDEFINED TIME PERIOD                              │
└─────────────────────────────────────────────────────────┘

┌─ 306
┌─────────────────────────────────────────────────────────┐
│ OBTAINING SERVICE RECORDS DATA OF THE PRODUCTS TO         │
│ DETERMINING DTC OBSERVANCE DATA, WHERE THE DTC            │
│ OBSERVANCE DATA IS INDICATIVE OF NUMBER OF CYCLES AT WHICH │
│ EACH DTC ASSOCIATED WITH EACH PART IS OBSERVED FOR FIRST  │
│ TIME IN THE FIRST PREDEFINED TIME PERIOD                  │
└─────────────────────────────────────────────────────────┘

┌─ 308
┌─────────────────────────────────────────────────────────┐
│ IDENTIFYING DEPENDENCY PARAMETERS BETWEEN THE PART-       │
│ FAILURE DATA, THE DTC OCCURRENCE DATA AND THE DTC         │
│ OBSERVANCE DATA, WHERE THE IDENTIFYING IS BASED ON        │
│ BAYESIAN NETWORK THAT REPRESENTS PROBABILISTIC            │
│ RELATIONSHIPS BETWEEN THE PART-FAILURE DATA, THE DTC      │
│ OCCURRENCE DATA AND THE DTC OBSERVANCE DATA               │
└─────────────────────────────────────────────────────────┘

┌─ 310
┌─────────────────────────────────────────────────────────┐
│ COMPUTING NUMBER OF FAILURES OF THE PRODUCTS IN A SECOND  │
│ TIME PERIOD BASED ON THE DEPENDENCY PARAMETERS FOR        │
│ ESTIMATING THE WARRANTY COST, WHEREIN THE SECOND TIME     │
│ PERIOD IS INDICATIVE OF TIME AFTER THE FIRST TIME PERIOD  │
└─────────────────────────────────────────────────────────┘

Fig. 3

**EP 2 975 564 A1**

Europäisches Patentamt
European Patent Office
Office européen des brevets

# EUROPEAN SEARCH REPORT

Application Number

EP 15 17 6917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/119231 A1 (NAMBURU SETU MADHAVI [US] ET AL) 19 May 2011 (2011-05-19) * paragraph [0035] - paragraph [0039]; figure 2 * | 1-16 | INV. G06Q10/06 |
| A | MING-WEI LU: "Automotive reliability prediction based on early field failure warranty data", QUALITY AND RELIABILITY ENGINEERING INTERNATIONAL, JOHN WILEY, US, vol. 14, no. 2, 1 March 1998 (1998-03-01), pages 103-108, XP002278020, ISSN: 0748-8017, DOI: 10.1002/(SICI)1099-1638(199803/04)14:2<103 ::AID-QRE147>3.3.CO;2-X * the whole document * | 1-16 | |

TECHNICAL FIELDS SEARCHED (IPC)

G06Q

The present search report has been drawn up for all claims

| Place of search | Date of completion of the search | Examiner |
|---|---|---|
| The Hague | 30 October 2015 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 6917

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2015

| Patent document cited in search report | Publication date | Patent family member(s) | Publication date |
|---|---|---|---|
| US 2011119231 A1 | 19-05-2011 | NONE | |

For more details about this annex : see Official Journal of the European Patent Office, No. 12/82

EPO FORM P0459

**EP 2 975 564 A1**

**REFERENCES CITED IN THE DESCRIPTION**

**Patent documents cited in the description**

- IN 2311MUM2014